**Europäisches Patentamt**

**European Patent Office**

**Office européen des brevets**

(19)

(11) Veröffentlichungsnummer: **0 285 567 B1**

(12) # EUROPÄISCHE PATENTSCHRIFT

(45) Veröffentlichungstag der Patentschrift:
29.05.91 Patentblatt 91/22

(51) Int. Cl.$^5$: **E01C 5/06**

(21) Anmeldenummer: **88810197.9**

(22) Anmeldetag: **25.03.88**

(54) Pflasterstein-Satz.

(30) Priorität: 02.04.87 CH 1270/87

(43) Veröffentlichungstag der Anmeldung:
05.10.88 Patentblatt 88/40

(45) Bekanntmachung des Hinweises auf die
Patenterteilung:
29.05.91 Patentblatt 91/22

(84) Benannte Vertragsstaaten:
**AT BE CH DE FR GB IT LI LU NL**

(56) Entgegenhaltungen:
**DE-A- 1 808 311
DE-A- 2 832 524
DE-A- 3 507 226
DE-U- 7 243 351**

(73) Patentinhaber: **Ruckstuhl, Willi
Augwilerstrasse 48
CH-8302 Kloten (CH)**

(72) Erfinder: **Ruckstuhl, Willi
Augwilerstrasse 48
CH-8302 Kloten (CH)**

(74) Vertreter: **Feldmann, Paul David et al
c/o Patentanwaltsbüro FELDMANN AG
Kanalstrasse 17
CH-8152 Glattbrugg (CH)**

**Beschreibung**

Die vorliegende Erfindung betrifft einen Pflasterstein-Satz aus fabrikmässig vorgefertigten Steinen. Solche Steine werden vorwiegend aus Beton gegossen und sollen im Vergleich zu Natursteinen, welche direkt beim Verlegen einzeln behauen werden müssen, preiswertere Pflästerungen ermöglichen.

Naturstein-Pflästerungen sind ästhetisch besonders ansprechend, da sie durch ihre relativen Unregelmässigkeiten malerisch wirken und das Resultat handwerklichen Könnens und ansehnlichen Aufwandes darstellen. Das Verlegen von Natursteinen ist aber aus verständlichen Gründen besonders teuer, da jeder Stein einzeln aus einem Vorrat grobbehauener Steine ausgesucht und in bestimmten Einbaulagen für Kurven oder Randabschlüsse gar an Ort und Stelle behauen werden muss. Dies erfordert einen grossen Zeitaufwand für das Verlegen, was sich in teuren Handwerkerstunden beim Preis niederschlägt. Doch nicht allein das Verlegen von Natursteinen ist teuer, auch die Gewinnung von verlegebereiten Natursteinen bedarf eines beträchtlichen Aufwandes. Die Pflastersteine werden in speziellen Steinbrüchen gewonnen, je nach gewünschter Steinsorte. Sie müssen zunächst grob zerkleinert und in ein Pflastersteinformat behauen werden. Neben der Gewinnung der Natur-Pflastersteine fallen bis zum Verlegen meist auch beträchtliche Transportkosten an. Die Steinbrüche, welche besonders geeignete Steinsorten liefern, befinden sich nicht selten im Ausland.

Um die Kosten für Pflästerungen ganz allgemein zu senken, stellt man Pflastersteine auch fabrikmässig her. In neuerer Zeit bekannt geworden sind hier insbesondere die sogenannten Verbundsteine. Solche werden aus Beton gegossen, wobei die Steine in verschiedenen, jedoch stets gleichbleibenden Formen hergestellt werden. Eine Pflästerung wird dann in der Regel aus einer einzigen Steinform zusammengesetzt, indem identische Steine aneinandergereiht werden. Die Fugen zwischen den Steinen sind dabei alle geschlossen, das heisst die Steine schliessen bündig aneinander an. Das Verlegen von solchen Pflästerungen geht verhältnismässig schnell vonstatten. Als Nachteil der Verbundstein-Pflästerung kann angeführt werden, dass ihr perfekt regelmässiges Erscheinungsbild nicht jedermann anspricht. Gerade vor Häusern in rustikalem Baustil, zum Beispiel Gasthäusern der Privathäusern, aber auch für Neu-Pflästerungen von Altstadtbezirken ist das Erscheinungsbild einer Naturstein-Pflästerung gefragt. Vermehrt werden in letzter Zeit gar Asphaltbeläge in traditionellen Altstadtvierteln verschiedener Städte herausgerissen und durch Pflästerungen ersetzt, vorwiegend zur Schaffung von Fussgängerzonen. Die Kosten solcher städtebaulicher Massnahmen sind jedoch beträchtlich, wenn hierzu Natursteine verwendet werden sollen.

Mit der DE-A 35 07 226 ist ein Pflasterstein-Satz bekannt geworden, welcher aus mehreren quadratischen und rechteckigen Steinen besteht, die fabrikmässig aus Beton gegossen werden. Die Steine haben vorzugsweise die gleiche Breite und fünf unterschiedliche Längen, welche durch entsprechende Aneinanderreihung von je zwei Steinen eine feste Länge ergeben.

Die Steine weisen annähernd rundum einen Sockel als Distanzelement auf, was zur Schaffung von regelmässigen Fugenbreiten dient. Weiter erlauben diese Sockel, die einzelnen Steine druckkrafschlüssig aneinander zu reihen. Die Pflastersteine nach dieser Offenlegungsschrift haben jedoch den Nachteil, dass Kurven und Randasbschlüsse nur schwierig zu erstellen sind. Die Steine müssen hierfür zum Teil behauen werden, oder nicht bündig aneinandergereiht werden. Das aber fürht zu übermässigen Fugendicken, die das Gesamtbild der Pflästerung stören.

Die DE-OS-1'808'311 zeigt ein Wabenverbundpflaster mit sechseckigen Normalsteinen. Soll mit diesen Steinen eine rechteckige Fläche bepflastert werden, sind dazu noch Randsteine erforderlich. Ist die zu bepflasternede Fläche nicht rechteckig, wie beispielsweise bei einer Kurve, werden dazu weitere zehn verschieden geformte Keilsteine benötigt. Trotz der relativ grossen Anzahl verschiedener Steine wirkt einen mit diesen Steinen bepflasterte Fläche durch sein regelmässiges Fugenbild eintönig.

Es ist die Aufgabe der vorliegenden Erfindung, einen Pflasterstein-Satz zu schaffen, der bezüglich der Fabrikation und dem Verlegeaufwand preisgünstig Fugenbild aufweist und um Kurven, wie auch an Rändern bündig aneinandergereiht werden kann, ohne dass Steinmetzarbeit erforderlich ist. Diese Aufgabe wird gelöst von einem Plasterstein-Satz aus vorgefertigten Pflastersteinen, der die Merkmale des Patentanspruches I aufweist.

In den Zeichnungen ist eine beispielsweise Aus-führung des erfindungsgemässen Pflasterstein-Sat-zes dargestellt und auch einige Verlegearten sind gezeigt.

Es zeigt :

Figur 1 : Einen Pflasterstein aus dem erfindungsgemässen Pflasterstein-Satz in perspektivischer Ansicht ;

Figur 2 : Einen erfindungsgemässen Pflasterstein-Satz in Draufsicht ;

Figur 3 : Die Verlegeart des Pflasterstein-Satzes als Pfeilmuster ;

Figur 4 : Die Verlegeart des Pfeilmusters um eine Kurve geführt ;

Figur 5 : Einige lineare Verlegemuster ;

Figur 6 : Eine Verlegung zu einem Rondell ;

Figur 7 : Die Verlegung zu einer archimedischen Spirale.

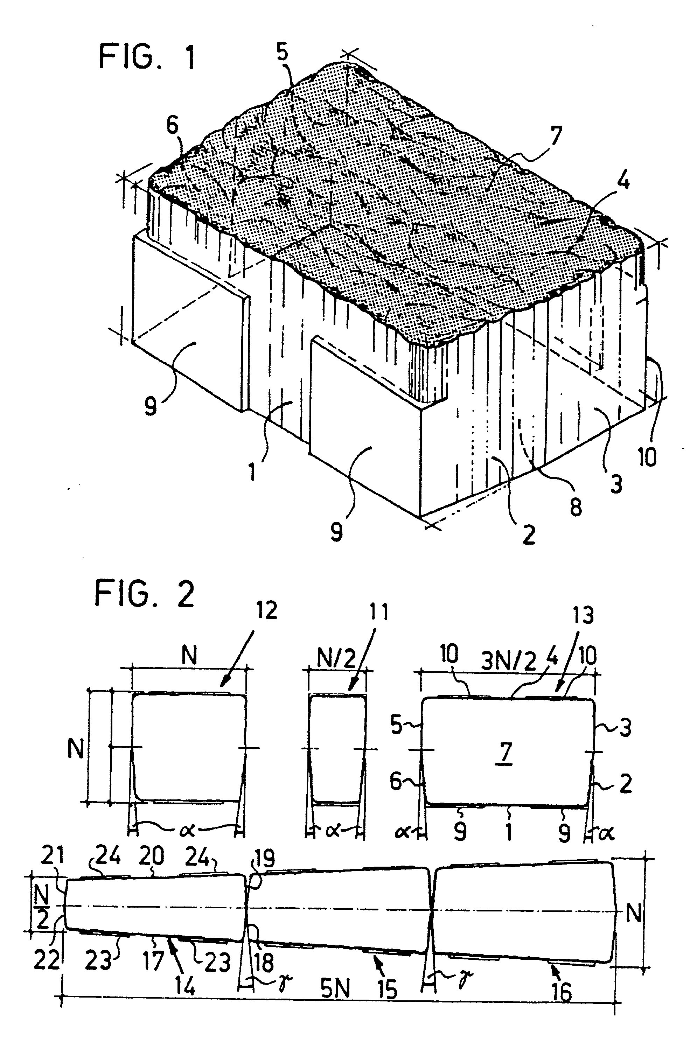

Der in Figur 1 gezeigte Pflasterstein zeigt den grundsätzlichen Aufbau eines Steins des erfindungsgemässen Pflasterstein-Satzes mit sechs ebenen seitlichen Begrenzungsflächen 1, 2, 3, 4, 5 und 6. Selbstverständlich sind die obere 7 und untere Begrenzungsfläche 8 zueinander parallel und rechtwinklig zu den seitlichen Begrenzungsflächen 1 bis 6. Die untere Fläche 8 ist eben, während die obere Begrenzungsfläche 7, die ja nach dem Verlegen als einzige noch sichtbar ist, eine unregelmässige Struktur aufweist. Eine solche Oberflächenstruktur wird vorteilhaft der Oberfläche eines Natursteins nachempfunden. An der seitlichen Begrenzungsfläche 1 und 4 sind Aufsätze 9, 10 vorhanden. Diese dienen beim Aneinanderreihen der Steine als Anschlag- bzw. Distanzelemente. Da sie nicht bis zur oberen Begrenzungsfläche reichen, bleiben sie beim verlegten Stein unsichtbar. Beim hier gezeigten Stein sind die Seitenflächen 1 und 4 sowie 3 und 5 zueinander parallel. Sie befinden sich hier jeweils gegenüberliegend am Stein. Die Begrenzungsflächen 2 und 6 hingegen schliessen zusammen einen spitzen Winkel ein. Die Längsmittelfläche des hier gezeigten Pflastersteins bildet in Draufsicht zusammen mit den Flächen 2 und 6 als Schenkel und der Fläche 1 als kürzere Grundlinie ein Trapez, während sie mit den Begrenzungsflächen 3, 4 und 5 in Draufsicht ein Rechteck bildet.

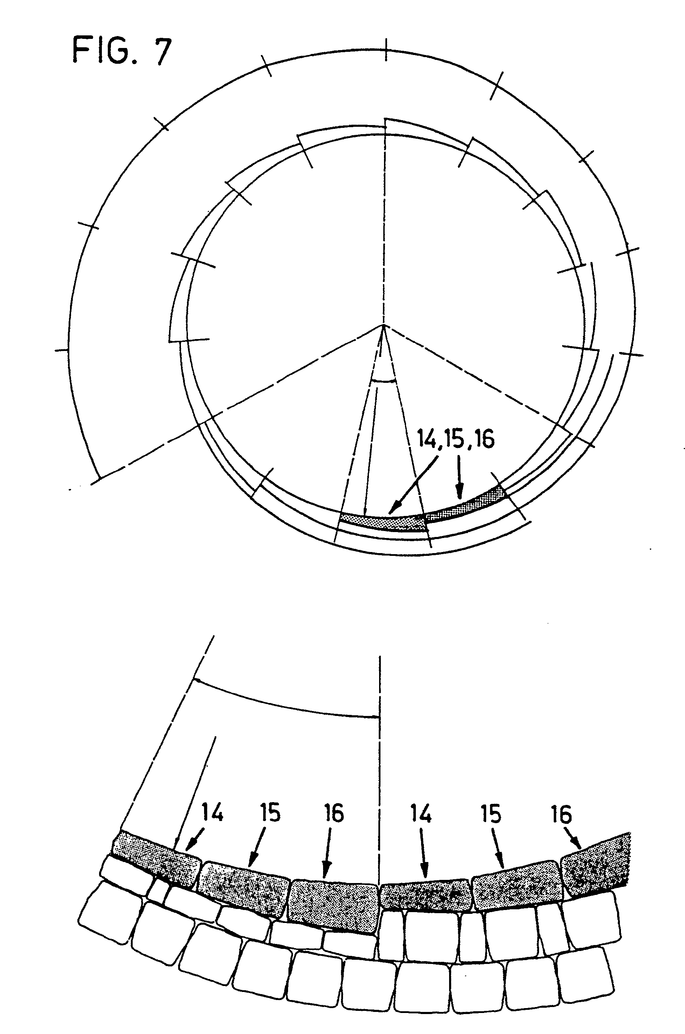

In Figur 2 ist ein kompletter erfindungsgemässer Pflasterstein-Satz in Draufsicht gezeigt. Die im wesentlichen rechteckig erscheinenden Steine 11, 12 und 13 bilden die meist verwendeten Grundsteine für eine Pflästerung. Bei einer normierten Breite von N enthält der Steinsatz einen Pflasterstein 11 der Länge N/2, einen 12 der Länge N und einen dritten 13 der Länge 3N/2. Diese Auswahl von verschiedenen Längen ermöglicht ein sehr vielseitiges und einfaches Verlegen, sodass stets ein unregelmässiges Fugenbild entsteht, in dem die Fugen laufend gebrochen werden. Die Steine werden beim linearen Verlegen vorteilhaft so aneinandergereiht, dass immer der nächstfolgende um 180° gedreht angereiht wird. Die durch die leicht abgeschrägten Flächen 2 und 6 jeweils entstehenden Fugenstücke fallen dann in Verlegerichtung einmal rechts und einmal links an. Die beiden abgeschrägten seitlichen Begrenzungsflächen 2 und 6 schliessen wie schon erwähnt einen spitzen Winkel ein. Der Winkel, welcher hierbei zwischen den Begrenzungsflächen 2 oder 6 und der Grundlinie des erwähnten Trapezes bzw. der Begrenzungsfläche 4 eingeschlossen wird, beträgt (90°-α), wobei α ein Winkel zwischen 3° und 5° ist. Darunter sind in Figur 2 weitere drei Steine 14, 15 und 16 gezeigt, die einander alle ähnlich sehen. Am Beispiel des Steins 14 ist ersichtlich, dass auch hier sechs seitliche Begrenzungsflächen 17-22 vorhanden sind. Die Flächen 18 und 21, sowie die Flächen 19 und 22 sind zueinander parallel, während die Begrenzungsflächen 17 und 20 zusammen einen spitzen Winkel einschliessen. Weiter sind die Flächen 17 und 20 wiederum mit Aufsätzen 23 und 24 versehen, welche als Anschlag- und Distanzelemente beim Verlegen dienen. Die Begrenzungsflächen 18 und 22 sowie 19 und 21 bilden die Trapezschenkel. Sie schliessen zusammen je einen Winkel γ ein, wobei γ ein Winkel zwischen 3° und 8° ist. Bei den hier gezeigten Steinen 14-16 beträgt der Winkel γ genau 5,7°. Dieses Winkelmass ermöglicht es, diese drei Steine 14-16 insgesamt 15 Mal in eine Kurve zu legen, indem je die Begrenzungsflächen 18 und 22 bündig aneinander angeschlossen werden. Dadurch entsteht ein Vollkreis, der als Ausgangsbasis zum Verlegen einer archimedischen Spirale dient, wie das später anhand von Figur 7 erläutert wird. Die Pflastersteine 14 bis 16 des erfindungsgemässen Steinsatzes bilden einen sogenannten Kurvensatz. Durch ein- oder mehrmaliges Einfügen von solchen Kurvensatz-Steinen lassen sich Wegkrümmungen einleiten. Zu beachten ist insbesondere, dass bei einem Verlegen der Kurvensatz-Steine wie sie hier in der Figur 2 gezeigt sind, die Breite des durch sie gebildeten Keils an der Grundseite 18, 19 einer Steinbreite N des Steines für den linearen Einbau entspricht und dann auf eine Breite an der Keilspitze von N/2 zusammenläuft. Die ganze Länge über die drei Kurvensatz-Steine beträgt 5 Steinbreiten N, also 5 N. Der Sinn dieser ganzen Dimensionierungen wird anhand der weiteren, nachfolgend beschriebenen Figuren, die besondere Verlegemuster zeigen, ersichtlich und erläutert.

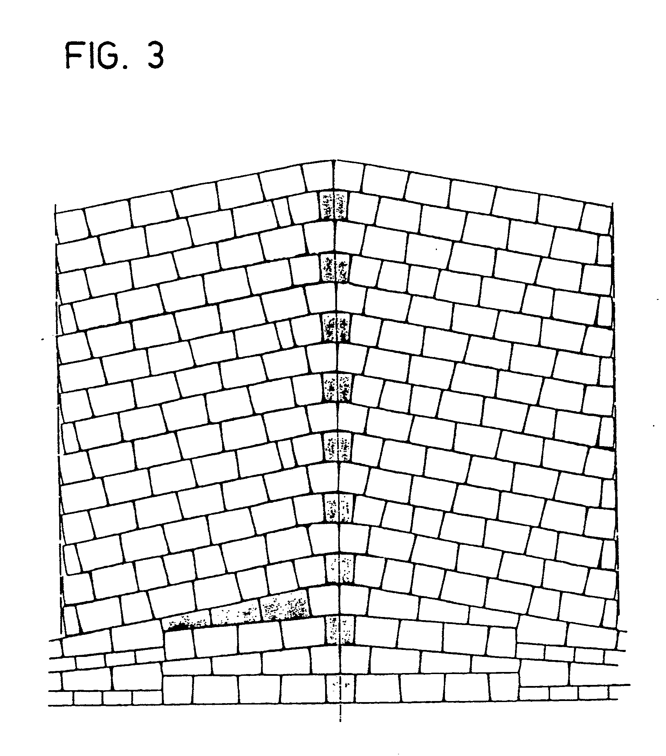

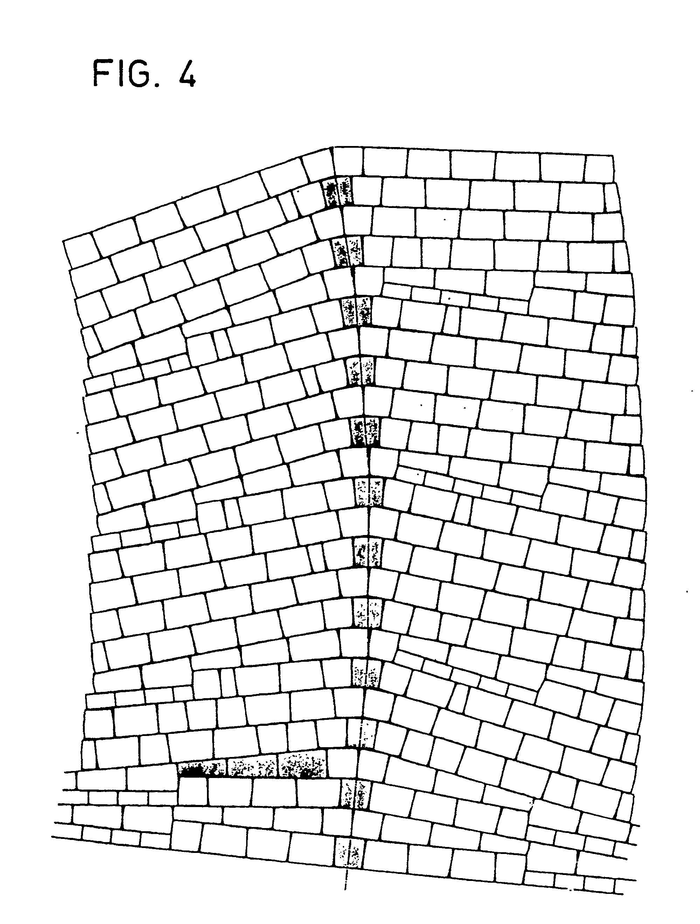

Nebst der schon erwähnten linearen Verlegeart zeigt Figur 3 die antike, römische Pfeilform, die vor allem für Gehwege attraktiv ist. Durch die pfeilförmige Anordnung der Steine ergeben sich zwei deutlich unterscheidbare Weghälften. Die Mitte kann durch gefärbte Steine zusätzlich markiert sein. Dadurch wird gar ein gewisser Sicherheits-Effekt erzielt, indem der Weg optisch deutlich in zwei Fahrbahnrichtungen getrennt wird. Wie Figur 4 zeigt, lässt sich sogar die römische Pfeilform mit dem erfindungsgemässen Pflasterstein-Satz in eine Kurve legen. Hierzu muss der Kurvensatz entsprechend zur Anwendung gebracht werden. Es ist aber bezeichnend für den vorliegenden Pflasterstein-Satz, dass das Verlegen selbst dieser komplizierten Form ohne das Behauen von einzelnen Steinen möglich ist.

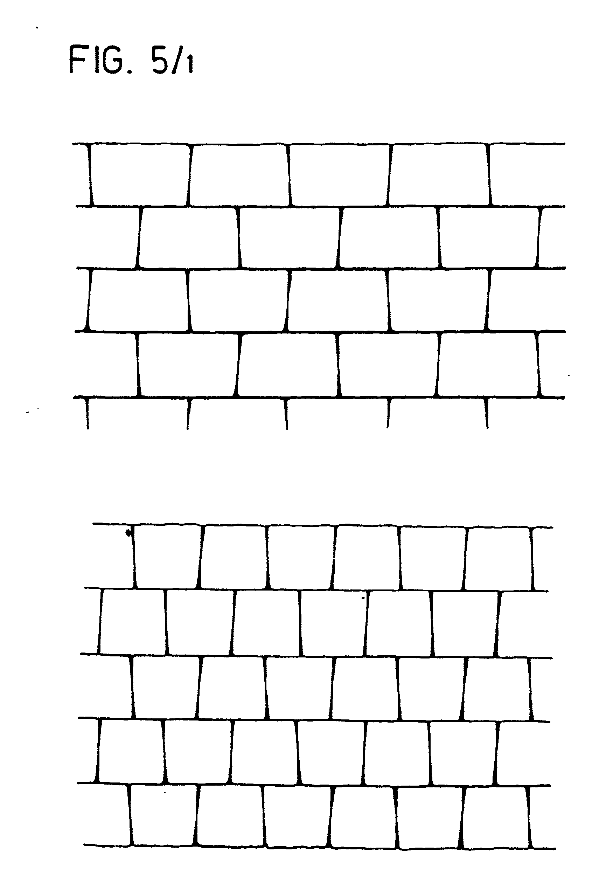

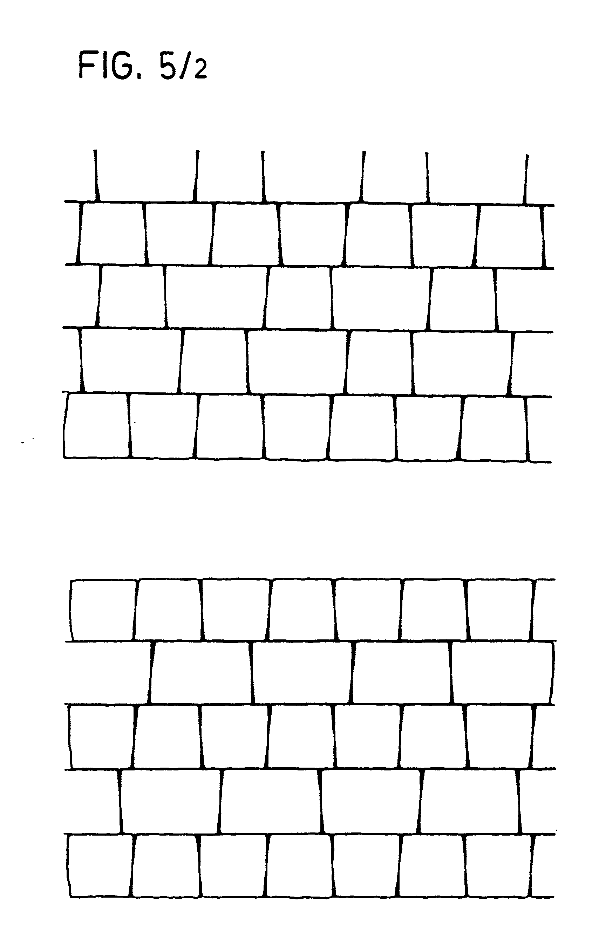

Figur 5 zeigt anhand verschiedener Verlegemustern, wie der Pflasterstein-Satz in der Regel verlegt wird. Grundsätzlich wird bei linearem Verlegen jeweils der nächste Stein um 180° gedreht an den zuletzt verlegten angelegt. Während die Längsfugen oder Lagerfugen regelmässig von gleicher Dicke sind, weisen die Quer- oder Stossfugen ein anderes, jedoch typisches Fugenbild auf. Sie sind jeweils aus zwei keilförmigen Fugen gebildet, welche mit den Keilspitzen aufeinander treffen. Durch diese Fugenart wird der Eindruck einer gewissen natürlichen Unregelmässigkeit vermittelt, ohne dass jedoch das Fugenbild in seiner Gesamtheit gestört wird. Die Stossfugen erscheinen nicht senkrecht auf den Lagerfugen. Jeder Stein ist an jeder Seite an den benachbarten bündig, d.h., druckkraftschlüssig angelegt. Dies wird insbesondere durch die an den Begrenzungsflächen vorstehenden Aufsätze 9, 10, 23, 24 ermöglicht, während auf den Querseiten beim wechselweisen Verlegen die Kanten zwischen den Begrenzungsflächen 2 und 3, 5 und 6, 18 und 19 sowie 21 und 22 die jeweiligen Stosskräfte aufnehmen. Der einzelne Stein ist durch die kraftschlüssige Verbindung mit seinen Nachbarsteinen unverrückbar in der Pflästerung gehalten, sodass Schub- und Zugkräfte wie auch Drehmomente, welche insbesondere durch das Befahren mit Fahrzeugen, zum Beispiel mit Lastwagen, unweigerlich auftreten, problemlos absorbiert werden. Durch die abwechslungsweise Verwendung von Steinen unterschiedlicher Länge wird der täuschend ähnliche Eindruck einer Naturstein-Pflästerung erweckt.

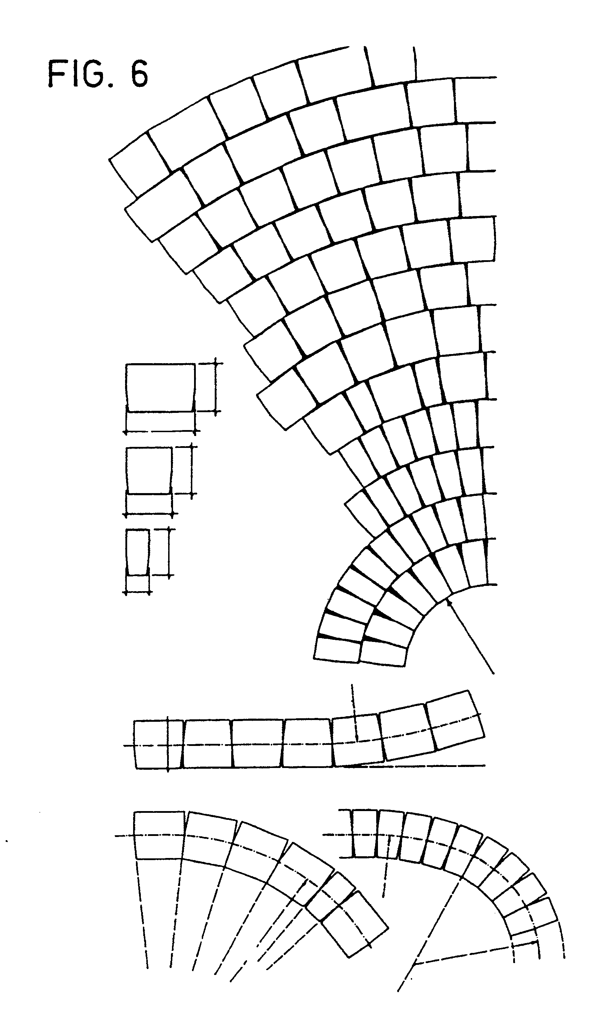

Wie in Figur 6 dargestellt, erlaubt der erfindungsgemässe Pflasterstein-Satz nicht bloss ein lineares Verlegen. Werden die verschiedenen Steine zum Beispiel konsequent mit den Begrenzungsflächen, welche die Trapezschenkel bilden, aneinander angereiht, so lässt sich damit ein Rondell verlegen, wie es die Figur 6 zeigt. Je grösser der Radius des Rondells wird, umso öfter müssen einzelne Steine um 180° gedreht eingesetzt werden. Trotzdem, dass das hier gezeigte Rondell bloss aus drei verschiedenen Steinen aufgebaut ist, wird ein unregelmässiges Fugenbild erzielt, das eine Natursteinpflästerung vortäuscht.

Figur 7 schliesslich gibt Einblick in die ganz besondere Möglichkeit, mit Hilfe des Kurvensatzes eine archimedische Spirale zu verlegen. Hierzu wird von einer Kreisfläche ausgegangen, um die 15 Mal ein dreiteiliger Kurvensatz angelegt wird. Dann wird an einen ersten Kurvensatz und an jeden übernächsten aussen eine Reihe von Steinen der Länge N/2 angelegt und an die übrigen Kurvensätze Steine der Länge N. Vom ersten Kurvensatz aus lässt sich dann nahtlos eine archimedische Spirale der Breite N durch entsprechende Steine fortführen. Der Radius der Spirale nimmt also pro 360° um sieben Steinreihen der Breite N zu. Bei herkömmlich üblicherweise verlegten Spiralen beträgt die Zunahme des Radius pro 360° jeweils nur eine Steinbandbreite.

Der vorliegend Pflasterstein-Satz erlaubt eine Vielzahl von Gestaltungsmustern, wie das an einigen Beispielen gezeigt und erläutert wurde. Seine besondere Kurvenfreundlichkeit ist seiner speziellen Form zu verdanken, die es erlaubt, ohne spezielle Kurvensteine Radien bis hinunter zur 2,5-fachen Steinhöhe zu legen. Bei allen Verlegearten werden die Steine satt aneinander geschoben, sodass eine längsaxiale Schubübertragung möglich ist. Bei Radien von 10-facher Steinhöhe, was einem praktischen Mass von ca. 1,26 m entspricht, sind die Fugenweiten innen und aussen immer noch gleich gross wie in der Geraden. Das Fugenbild bleibt unverändert. Bei kleineren Radien schliessen sich die inneren Stossfugenhälften allmählich, bis sie sich, bei einem Radius von 2,5-facher Steinhöhe und bei Verwendung von Halbsteinen, ganz schliessen. Dies ist bei einem Radius von ca. 30 cm der Fall.

## Ansprüche

1. Pflasterstein-Satz aus vorgefertigten Pflastersteinen, die zueinander parallele obere und untere Begrenzunsflächen (7, 8) und in Draufsicht je sechs ebene, seitliche Begrenzungsflächen (1-6 ; 17-22) aufweisen, dadurch gekennzeichnet, dass er aus sechs Steinen (11-16) besteht, wovon drei Steine (11, 12, 13) je einen trapezförmigen und einen rechteckförmigen Teil aufweisen, und drei Steine (14, 15, 16) je im wesentlichen trapezförmig ausgebildet sind, dass bei allen sechs Steinen vier der seitlichen Begrenzungsflächen (1 und 4 ; 3 und 5 ; 18 und 21 ; 19 und 22) zu zweien zueinander parallel verlaufen, und dass die verbleibenden zwei einander gegenüberliegenden seitlichen Begrenzungsflächen (2 und 6 ; 17 und 20) miteinander einen spitzen Winkel einschliessen.

2. Pflasterstein-Satz nach Anspruch 1, dadurch gekennzeichnet, dass die aus rechteck- und traperzförmigen Teil aufgeteilten Steine (11, 12, 13) an der kürzeren Trapez-Grundseite (1), sowei an der parallel gegenüberliegenden Rechteckseite (4), Aufsätze (9, 10) aufweisen, die als Distanz- und Anschlagelemente zu wirken bestimmt sind, und dass die im wesentlichen traperzförmigen Steine (14, 15, 16) nämliche Aufsätze (23, 24) an den einen spitzen Winkel einschliessenden Seiten (17, 20) der Trapeze aufweisen.

3. Pflastern-Satz nach Anspruch 1, dadurch gekennzeichnet, dass die drei in rechteck- und traperzförmige Teile aufgeteilten Steine (11, 12, 13) eine gemeinsame Breite N, aber drei unterschiedliche Längen von N/2 (11), N (12) und 3N/2 (13) aufweisen, während die drei im wesentlichen trapzeförmigen Steine (14, 15, 16) längs ihren Symmetrieachsen aneinandergereiht zusammen in Draufsicht einen Keil der Länge 5N bilden mit einer Grundbreite N und einer Keilspitze der Breite N/2.

4. Pfasterstein-Satz nach Anspruch 1, dadurch gekennzeichnet, dass bei den in einen rechteck- und trapezförmigen Teil aufgeteilten Steinen (11, 12, 13) die Trapezschenkel (2, 6) mit der Grundbreite des Trapezes je einen Winkel von (90°-α) einschliessen, wobei α ein Winkel zwischen 3° und 8° ist.

5. Pflasterstein-Satz nach Anspruch 1, dadurch gekennzeichnet, dass bei den im wesentlichen trapezförmigen Steinen (14, 15, 16) die Grundseiten (18, 19 ; 21, 22) je einen stumpfen Winkel von (180°-γ) einschliessen, wobei γ ein Winkel zwischen 3° und 8° ist.

## Claims

1. Paving stone set formed from prefabricated paving stones, which have parallel, upper and lower boundary faces (7, 8) and, in plan view, in each case six planar, lateral boundary faces (1-6 ; 17-22), characterized in that it comprises six stones (11-16), whereof three stones (11, 12, 13) have in each case a trapezoidal and a rectangular part, and three stones (14, 15, 16) each having a substantially trapezoidal construction, that in the case of all six stones four of the lateral boundary faces (1 and 4 ; 3 and 5 ; 18 and 21, 19 and 22) are parallel to one another in pairs and that the remaining two facing, lateral boundary faces (2 and 6 ; 17 and 20) form together an acute angle.

2. Paving stone set according to claim 1, characterized in that the stones (11, 12, 13) formed from rectangular and trapezoidal parts have on the shorter trapezium base side (1) and on the parallel-facing rectangle side (4) attachments (9,10), which serve as spacing and stop elements and that the substantially trapezoidal stones (14, 15, 16) have attachments (23, 24) on the sides (17, 20) of the trapezia forming an acute angle.

3. Paving stone set according to claim 1, characterized in that three stones (11, 12, 13) subdivided into rectangular and trapezoidal parts have a common width N, but three different lengths of N/2 (11), N (12) and 3N/2 (13), whilst the three substantially trapezoidal stones (14, 15, 16) lined up along their axes of symmetry in plan view together form a wedge of length 5N with a base width N and a wedge tip of width N/2.

4. Paving stone set according to claim 1, characterized in that in the case of the stones (11, 12, 13) subdivided into a rectangular and a trapezoidal part, the trapezium sides (2, 6) form with the base width of the trapezium in each case an angle of (90°-α), in which α is an angle between 3 and 8°.

5. Paving stone set according to claim 1, characterized in that in the case of substantially trapezoidal stones (14, 15, 16), the base sides (18, 19 ; 21, 22) in each case form an obtuse angle of (180°-γ), in which γ is an angle between 3 and 8°.

## Revendications

1. Jeu d'éléments de pavage, constitué de pavés préfabriqués qui présentent chacun des faces de délimitation supérieure et inférieure parallèles (7, 8) et, en vue de dessus, six faces de délimitation latérales planes (1-6 ; 17-22), caractérisé en ce qu'il est constitué de six pavés (11-16), dont trois (11, 12, 13) présentent chacun une partie trapézoïdale et une partie rectangulaire, et dont trois autres (14, 15, 16) sont chacun réalisés de forme essentiellement trapézoïdale, en ce que, dans les six pavés, quatre faces de délimitation latérales (1 et 4 ; 3 et 5 ; 18 et 21 ; 19 et 22) s'étendent en parallèle deux par deux, et en ce que les deux faces de délimitation latérales restantes, mutuellement opposées (2 et 6 ; 17 et 20), forment un angle aigu.

2. Jeu d'éléments de pavage selon la revendication 1, caractérisé en ce que les pavés (11, 12, 13), divisés en une partie rectangulaire et une partie trapézoïdale, présentent, sur le côté de petite base du trapèze (1), et sur le côté parallèle opposé du rectangle (4), des couronnements (9, 10) destinés à servir d'éléments d'écartement et de butée, et en ce que les pavés essentiellement trapézoïdaux (14, 15, 16) présentent les mêmes couronnements (23, 24) sur les côtés (17, 20) du trapèze qui forment un angle aigu.

3. Jeu d'éléments de pavage selon la revendication 1, caractérisé en ce que les trois pavés (11, 12, 13), divisés en une partie rectangulaire et une partie trapézoïdale, présentent une même largeur N mais trois longueurs différentes N/2 (11), N (12) et 3N/2 (13), tandis que les trois pavés essentiellement trapézoïdaux (14, 15, 16), alignés le long de leurs axes de symétrie, forment conjointement, en vue de dessus, un coin de longueur 5N, avec une base de largeur N et un sommet de largeur N/2.

4. Jeu d'éléments de pavage selon la revendication 1, caractérisé en ce que, pour les pavés (11, 12, 13) divisés en une partie rectangulaire et une partie trapézoïdale, les côtés latéraux (2, 6) du trapèze, α étant un angle compris entre 3° et 8°.

5. Jeu d'éléments de pavage selon la revendication 1, caractérisé en ce que, pour les pavés (14, 15, 16) essentiellement trapézoïdaux, les côtés de base (18, 19 ; 21, 22) forment chacun un angle obtus de (180°-γ), γ étant un angle compris entre 3° et 8°.

FIG. 1

FIG. 2

FIG. 3

FIG. 4

# FIG. 5/1

# FIG. 5/2

FIG. 6

# FIG. 7

14,15,16

14  15  16    14  15  16